(19) Europäisches Patentamt
European Patent Office
Office européen des brevets

(11) Publication number: **0 682 052 A1**

(12) # EUROPEAN PATENT APPLICATION

(21) Application number: **95201158.3**

(22) Date of filing: **04.05.95**

(51) Int. Cl.[6]: **C08G 59/24**, C08G 59/62, C08L 63/02, C08L 61/00, //(C08L63/02,61:00),(C08L61/00, 63:02)

(30) Priority: **09.05.94 JP 117436/94**

(43) Date of publication of application: **15.11.95 Bulletin 95/46**

(84) Designated Contracting States: **AT BE CH DE ES FR GB IT LI NL SE**

(71) Applicant: **SHELL INTERNATIONALE RESEARCH MAATSCHAPPIJ B.V.**
**Carel van Bylandtlaan 30**
**NL-2596 HR Den Haag (NL)**

(72) Inventor: **Murata, Yasuyuki, c/o Yuka Shell Epoxy K.K.**
**Dpt.ADMP,**
**Nishiazabu Mitsui,**
**17-30 Nishiazabu**
**4-chome**
**Minato-ku,**
**Tokyo 106 (JP)**
Inventor: **Nakanishi, Yoshinori, c/o Yuka Shell Epoxy K.K.**
**Dpt.ADMP,**
**Nishiazabu Mitsui,**
**17-30 Nishiazabu**
**4-chome**
**Minato-ku,**
**Tokyo 106 (JP)**
Inventor: **Ochi, Mitsukazu, c/o Yuka Shell Epoxy K.K.**
**Dpt.ADMP,**
**Nishiazabu Mitsui,**
**17-30 Nishiazabu**
**4-chome**
**Minato-ku,**
**Tokyo 106 (JP)**

(54) **Composition of epoxy resins based on condensed polynuclear aromatic compounds.**

(57) An epoxy resin composition comprising a blend of:
(a) at least one condensed polynucleararomatic epoxy resin derived from 2,6-dihydroxynaphthalene, 2,6-dihydroxyanthracene or 2,7-dihydroxyphenanthrene and (b) as curing agent, at least one polyhydric phenolic resin curing agent derived from at least one polyhydric phenolic compound having at least two phenolic hydroxyl groups which are attached to adjacent positions on an aromatic ring like catechol or dihydroxynaphthalenes, as essential components.

The epoxy resin compositions according to the invention have in the cured state high heat resistance, i.e., an excellent strength at high temperature, and are not brittle at ambient temperature. They can be used as an adhesive, casting composition, encapsulating composition, moulding composition, and in the preparation of laminates.

EP 0 682 052 A1

The present invention relates to an epoxy resin composition, to articles comprising said epoxy resin composition in the cured state, to a process for the preparation of said epoxy resin composition and to the use of said epoxy resin composition.

Epoxy resin compositions are used in many areas such as laminating, coating, adhesion, encapsulation and moulding. In many of these areas the conditions of use have become more severe, as a result whereof for example epoxy resins compositions should tolerate increasingly higher temperatures. Common epoxy resin compositions based on a bisphenol A type epoxy resin often do not meet today's performance requirements, in particular the requirements as to heat resistance.

Polyfunctional type epoxy resins such as novolak epoxy resins, trifunctional epoxy resins or tetrafunctional epoxy resins provide improved heat resistance to the cured compositions, however, said cured compositions have insufficient strength at high temperature and are hard and brittle at ambient temperature.

The present invention therefore aims at providing an epoxy resin composition which in the cured state has a high level of strength at high temperature and is not brittle at ambient temperature.

The present invention thus relates to an epoxy resin composition comprising a blend of: (a) at least one condensed polynucleararomatic epoxy resin represented by the following general formula (I)

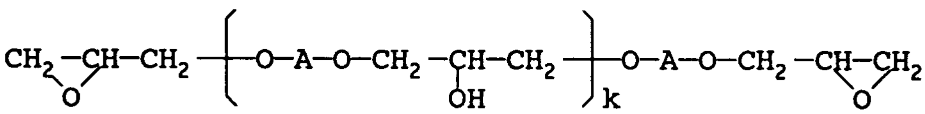

(I)

wherein each A may be the same of different divalent group of the following general formulae (II), (III) or (IV) and wherein k is on average a value in the range of from 0 to 5

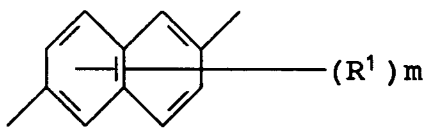

(II)

wherein $R^1$ may be a hydrogen atom, an alkyl group having from 1 to 10 carbon atoms, a substituted or unsubstituted phenyl group, a substituted or unsubstituted aralkyl group, an alkoxy group, or a halogen atom, each $R^1$ being the same or different and m being an integer of from 0 to 6;

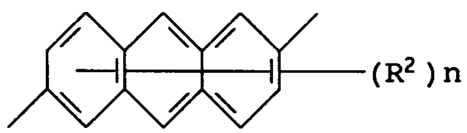

(III)

wherein $R^2$ is a hydrogen atom, an alkyl group having from 1 to 10 carbon atoms, a substituted or unsubstituted phenyl group, a substituted or unsubstituted phenyl group, a substituted or unsubstituted aralkyl group, an alkoxy group, or a halogen atom, each $R^2$ being the same or different, and n being an integer of from 0 to 8;

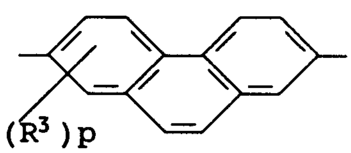

(IV)

wherein $R^3$ represents hydrogen atom, an alkyl group having from 1 to 10 carbon atoms, a substituted or unsubstituted phenyl group, a substituted or unsubstituted aralkyl group, an alkoxy group, or a halogen atom, each $R^3$ being the same or different, and p being an integer of from 0 to 8 and (b) at least one polyhydric phenolic resin curing agent derived from a polyhydric phenolic compound having at least two

phenolic hydroxyl groups attached to adjacent positions on an aromatic ring.

The condensed polynucleararomatic epoxy resins represented by the above general formula (I) can be obtained by a condensation reaction of the precursor dihydroxy condensed polynucleararomatic compound with epihalohydrin in the presence of an alkali salt.

The condensation reaction of one or a mixture of at least two precursor dihydroxy condensed polynucleararomatics and the epihalohydrin may be carried out by any conventional method, for example according to the following method.

Firstly, the precursor dihydroxy condensed polynucleararomatic compound(s) is/are dissolved in epihalohydrin to prepare a uniform solution, in an amount such that of from 2 to 20 mols of epihalohydrin per mole of phenolic hydroxyl groups is present. Subsequently, of from 1 to 2 mols of alkali metal hydroxide per mole of phenolic hydroxyl groups is added, while stirring and the reaction is carried out under ordinary pressure or reduced pressure and at a reaction temperature in the range of from 30 to 105 °C. If necessary, water may be removed from the reaction mixture by azeotropic distillation. Oil present in the condensate is separated and returned to the reaction system. The alkali metal hydroxide can be added intermittently or continuously in small amounts over a period of from 1 to 8 hours in order to suppress a too fast reaction. The total reaction time is usually of from 1 to 10 hours.

At the end of the reaction the insoluble salts, which are by products, are removed by filtering or washing with water, after which unreacted epihalohydrin is distilled away under reduced pressure so as to obtain the desired epoxy resin.

Epichlorohydrin or epibromohydrin are suitable epihalohydrins and suitable alkali metal hydroxides are NaOH or KOH.

This condensation reaction may be carried out in the presence of a catalyst, for example: quaternary ammonium salts, such as tetramethylammonium chloride or tetraethylammonium bromide; tertiary amines, such as benzyl dimethylamine or 2,4,6-(tris-dimethyl aminomethyl)phenol; imidazoles, such as 2-ethyl-4-methyl imidazole or 2-phenyl imidazole; phosphonium salts, such as ethyl triphenyl phosphonium iodide; and phosphines, such as triphenyl phosphine.

The condensation reaction may also be carried out in an inert organic solvent, for example alcohols, such as ethanol or isopropanol; ketones, such as acetone or methyl ethyl ketone; ethers, such as dioxane or ethylene glycol dimethyl ether; and non-protonic polar solvents, such as dimethyl sulfoxide or dimethyl formamide.

The condensed polynucleararomatic epoxy resin prepared by means of the above process may further be subjected to the following treatment in order to lower its saponifiable halogen content. The crude epoxy resin is dissolved in an inert organic solvent such as for example isopropanol, methyl ethyl ketone, methyl isobutyl ketone, toluene, xylene, dioxane, propylene glycol monomethyl ether or dimethyl sulfoxide, followed by addition of the alkali metal hydroxide in the form of a solid or an aqueous solution and reacting the mixture at a temperature of about 30 to 120 °C for a period of from 0.5 to 8 hours. Subsequently excess alkali metal hydroxide or by-product salt is removed by washing with water, and the organic solvent is removed by destillation under reduced pressure. Purified condensed polynucleararomatic epoxy resin is thus obtained.

The polyhydric phenolic curing agent is derived from a polyhydric phenolic compound having at least two hydroxyl groups which are attached to adjacent positions on an aromatic ring, examples of the latter are compounds represented by the following general formulae (VI), (VII), (VIII) and (IX).

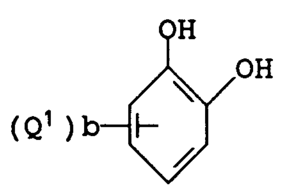

(VI)

wherein $Q^1$ represents an alkyl group having of from 1 to 10 carbon atoms, a substituted or unsubstituted phenyl group, a substituted or unsubstituted aralkyl group, an alkoxy group, hydroxyl group, or a halogen atom, each $Q^1$ being the same or different, and b being an integer of from 0 to 2;

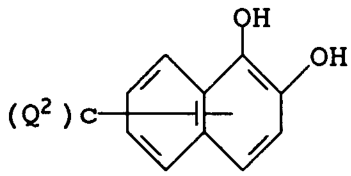

(VII)

wherein $Q^2$ represents an alkyl group having of from 1 to 10 carbon atoms, a substituted or unsubstituted phenyl group, a substituted or unsubstituted aralkyl group, an alkoxy group, hydroxyl group, or a halogen atom, each $Q^2$ being the same or different, and c being an integer of from 0 to 4;

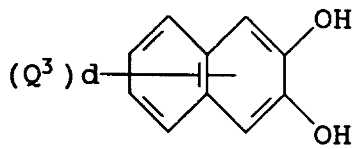

(VIII)

wherein $Q^3$ represents an alkyl group having from 1 to 10 carbon atoms, a substituted or unsubstituted phenyl group, a substituted or unsubstituted aralkyl group, an alkoxy group, hydroxyl group, or a halogen atom, each $Q^3$ being the same or different, and d being an integer of from 0 to 4.

Specific examples of the polyhydric phenolic compounds having at least two phenolic hydroxyl groups which are attached to adjacent positions on an aromatic ring are catechol, methyl catechol, dimethyl catechol, butyl catechol, phenyl catechol, methoxy catechol, pyrogallol, hydroxyhydroquinone, tetrahydroxybenzene, bromocatechol, 1,2-dihydroxynaphthalene, methyl-1,2-dihydroxynaphthalene, dimethyl-1,2-dihydroxynaphthalene, butyl-1,2-dihydroxynaphthalene, methoxy-1,2-dihydroxynaphthalene, hydroxy-1,2-dihydroxynaphthalene, dihydroxy-1,2-dihydroxynaphthalene, bromo-1,2-dihydroxynaphthalene, 2,3-dihydroxynaphthalene, methyl-2,3-dihydroxynaphthalene, dimethyl-2,3-dihydroxynaphthalene, butyl-2,3-dihydroxynaphthalene, methoxy-2,3-dihydroxynaphthalene, hydroxy-2,3-dihydroxynaphthalene, dihydroxy-2,3-dihydroxynaphthalene, bromo-2,3-dihydroxynaphthalene, 1,8-dihydroxynaphthalene, methyl-1,8-dihydroxynaphthalene, dimethyl-1,8-dihydroxynaphthalene, butyl-1,8-dihydroxynaphthalene, methoxy-1,8-dihydroxynaphthalene, hydroxy-1,8-dihydroxynaphthalene, dihydroxy-1,8-dihydroxynaphthalene and bromo-1,8-dihydroxynaphthalene.

There are no particular restrictions as to the process for the preparation of the polyhydric phenolic resin curing agent.

A suitable process is by oligomerization of the polyhydric phenolic compound having at least two phenolic hydroxyl groups which are attached to adjacent positions on an aromatic ring for example via an addition condensation reaction with a compound having a carbonyl group, via an addition reaction with a compound having an unsaturated bond, or via a condensation reaction with $\alpha$-hydroxyalkylbenzenes or $\alpha$-alkoxyalkylbenzenes.

Examples of compounds having a carbonyl group are aldehydes or ketones, such as formaldehyde, paraformaldehyde, acetaldehyde, benzaldehyde, hydroxybenzaldehyde, glyoxal, terephthalaldehyde, acetone, cyclohexanone and acetophenone.

Examples of compounds having an unsaturated bond are divinylbenzene diisopropenylbenzene, diisopropenylnaphthalene, dicyclopentadiene, norbornene and terpenes.

Examples of compounds having a carbonyl group and an unsaturated bond are crotonaldehyde and isopropenylacetophenone.

Examples of the $\alpha$-hydroxyalkylbenzenes or $\alpha$-alkoxyalkylbenzenes are $\alpha,\alpha'$-dihydroxyxylene, $\alpha,\alpha'$-dihydroxydiisopropylbenzene, $\alpha,\alpha'$-dimethoxyxylene, dihydroxymethylphenol, trihydroxymethylbenzene, trihydroxymethylphenol, dihydroxymethylcresol and tetrahydroxymethylbisphenol A.

The oligomerization reaction referred to above may suitably be carried out in the presence of an acid catalyst at a temperature of from 20-200 °C, for a period of from 1 to 20 hours.

If desired the polyhydric phenolic resin curing agent may also be prepared from a mixture of the polyhydric phenolic compound having at least two phenolic hydroxyl groups which are attached to adjacent positions on an aromatic ring and other phenolic compounds. These other phenolic compounds are preferably used in an amount of less than 50% by weight based on the total weight of the mixture containing the phenols. If a higher amount of other phenols is used, the mechanical properties of the cured resin are negatively affected.

When the amount of the compound having a carbonyl group or of the compound having an unsaturated bond or of the α-hydroxyalkylbenzenes, or of the α-alkoxyalkylbenzenes as used relative to the amount of polyhydric phenolic compound used in the condensation reaction increases, the molecular weight of the polyhydric phenolic resin curing agent product increases, which increases the level of a heat resistance of the cured epoxy resin composition comprising the polyhydric phenolic resin curing agent. It is a disadvantage though that these high molecular weight polyhydric phenolic resin curing agents have a relatively high viscosity, as a result whereof they are difficult to process.

Suitably the amount of the compound having a carbonyl group or of the compound having an unsaturated bond or of the α-hydroxyalkylbenzenes or of the α-alkoxyalkylbenzenes as used in the condensation reaction is of from 0.1 to 1.0 mol, preferably of from 0.2 to 0.8 mol, per mol of the total amount of phenolic compounds used.

Suitable acidic catalysts which can be used in the oligomerization reaction are hydrochloric acid, sulphuric acid, oxalic acid, toluenesulphonic acid, fluoroboric acid, heteropoly acids and activated clay. The amount used thereof is suitably of from 0.1 to 5 parts by weight per 100 parts by weight of the total amount of phenolic compounds used.

An inert solvent such as aromatic hydrocarbon, an alcohol or an ether or a ketone may also be used in the oligomerization reaction.

When the polyhydric phenolic resin curing agent is prepared by reacting a catechol with formaldehyde it will have the following structural formula (XIV):

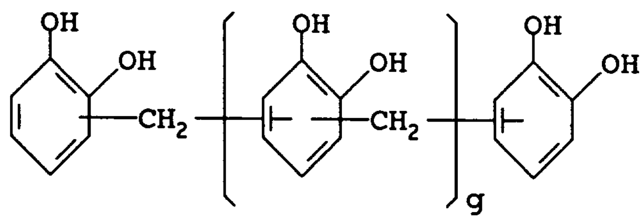

(XIV)

wherein g is on average a number in the range of from 0 to 10.

When the polyhydric phenolic resin curing agent is prepared by reacting 1,2-dihydroxynaphthalene with α,α'-dihydroxyxylene, it will have the following structural formula (XV):

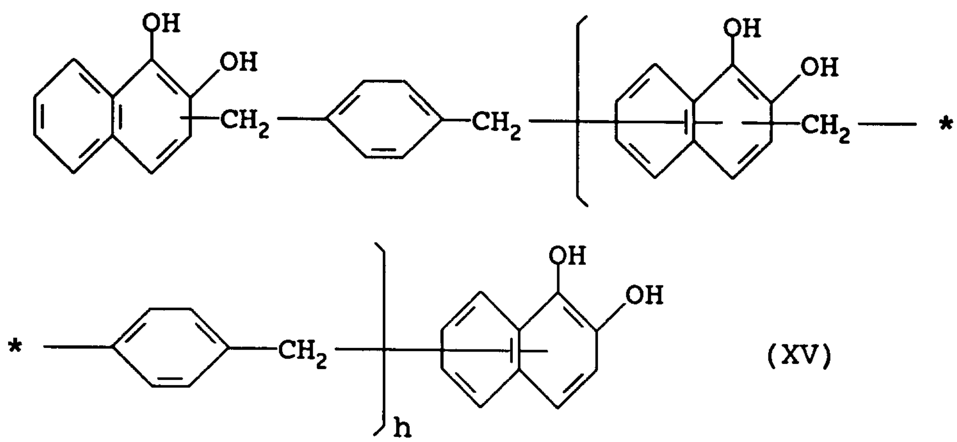

(XV)

wherein h is on average a number of from 0 to 10.

A particularly preferred polyhydric phenolic resin curing agent is represented by the following general formula (V):

$$B-Y-(B-Y)_a-B \qquad (V)$$

In the above formula (V), each B which may be the same or different represents a monovalent or divalent group based on a polyhydric phenolic compound represented by the above-mentioned general

formulae (VI), (VII), (VIII) or by the general formula (IX) mentioned below, and each Y which may be the same or different represents a divalent group represented by the following general formulae (X), (XI), (XII) or (XIII), and a is on average a number in the range of from 0 to 10;

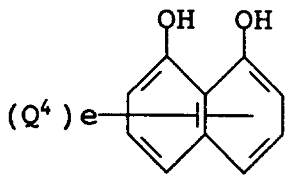

(IX)

wherein $Q^4$ represents an alkyl group having of from 1 to 10 carbon atoms, a substituted or unsubstituted phenyl group, a substituted or unsubstituted aralkyl group, an alkoxy group, hydroxyl group, or a halogen atom, each $Q^4$ being the same or different and e is an integer of from 0 to 4;

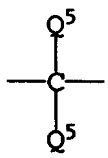

(X)

wherein $Q^5$ represents hydrogen atom, an alkyl group having of from 1 to 10 carbon atoms, a substituted or unsubstituted phenyl group, a substituted or unsubstituted aralkyl group, an alkoxy group, hydroxyl group, or a halogen atom, each $Q^5$ being the same or different;

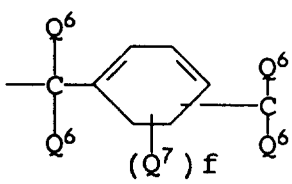

(XI)

wherein $Q^6$ and $Q^7$ each represents hydrogen atom, an alkyl group having 1 to 10 alkyl group, a substituted or unsubstituted phenyl group, a substituted or unsubstituted aralkyl group, an alkoxy group, hydroxyl group, or a halogen atom, each $Q^6$ and each $Q^7$ being the same or different, and f being an integer of from 0 to 4;

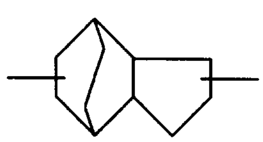

(XII)

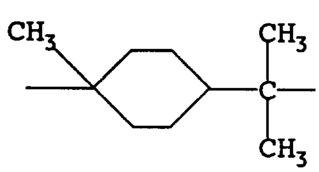

(XIII)

It was found that, if a phenolic resin curing agent derived from a phenolic compound having one phenolic hydroxyl group attached to an aromatic ring or if a polyhydric phenolic resin curing agent derived from a polyhydric phenolic compound having at least two phenolic hydroxyl groups which are attached to non-adjacent positions on the aromatic ring is used, the mechanical strength at high temperature of the cured epoxy resin composition comprising such phenolic resin curing agents is insufficient.
The epoxy resin composition according to the present invention may further comprise epoxy resins other

than the above-described condensed polynucleararomatic epoxy resin.

Said other epoxy resins are for example epoxy resins prepared by reacting epihalohydrin with phenolic compounds, naphtol novolak resins, polyhydric phenolic resins, amine compounds, and carboxylic acids.

Suitable phenolic compounds are: bisphenol A, bisphenol F, bisphenol AD, hydroquinone, resorcin, methyl resorcin, biphenol, tetramethylbiphenol, phenol novolak resin, cresol novolak resin, bisphenol A, novolak resin, dicyclopentadiene phenolic resin, terpene phenolic resin, phenol aralkyl resin. Suitable polyhydric phenolic resins are those obtained by condensation reaction of a phenolic compound with various aldehydes such as hydroxybenzaldehyde, crotonaldehyde or glyoxal. Suitable amine compounds are diaminodiphenyl methane, aminophenol and xylenediamine. Suitable carboxylic acids are methylhexahydrophthalic acid or dimer acid.

The amount of these other epoxy resins used in the epoxy resin composition according to the present invention is preferably 200 parts by weight or less per 100 parts by weight of the condensed polynucleararomatic epoxy resin.

The use of too high amounts of the other epoxy resin has a negative effect on the mechanical properties of the epoxy resin composition according to the invention in the cured state.

The epoxy resin composition of the present invention may further comprise another epoxy resin curing agent in admixture with the polyhydric phenolic resin curing agent(s).

Examples of such other curing agents are:

(i) phenolic resins such as phenol novolak resins, cresol novolak resins, bisphenol A novolak resins, dicyclopentadiene phenolic resins, phenol aralkyl resins, terpene phenolic resins, polyhydric phenolic resins obtained by condensation reaction of various phenols with various aldehydes such as hydroxybenzaldehyde, crotonaldehyde or glyoxal,

(ii) acid anhydrides such as methyltetrahydrophthalic anhydride, hexahydrophthalic anhydride, trimellitic anhydride or methylnadic acid, and

(iii) amines such as diethylene triamine, isophorone diamine, diaminodiphenyl methane or diaminodiphenyl sulfone.

These other epoxy resin curing agents are preferably used in amounts of 200 parts by weight or less per 100 parts by weight of the polyhydric phenolic resin curing agent. When too high amounts of the other epoxy resin curing agents are used, the epoxy resin compositions according to the present invention do not show the desired level of mechanical strength.

The epoxy resin composition of the present invention may further comprise additives commonly used in epoxy resin compositions. Examples of such additives, are curing accelerators, fillers, coupling agents, flame retardants, plasticizers, solvents, reactive diluents and pigments. These additives are used in appropriate amounts.

Suitable cure accelerators are imidazoles such as 2-methyl imidazole or 2-ethyl-4-methyl imidazole; amines such as 2,4,6-tris(dimethylaminomethyl) phenol or benzyldimethyl amine and organophosphorus compounds such as tributyl phosphine, triphenyl phosphine or tris(dimethoxyphenyl) phosphine.

Suitable fillers are fused silica, crystalline silica, glass powder, alumina and calcium carbonate. Suitable flame retardants are antimony trioxide and phosphoric acid. Flame retardancy may also be introduced by using a brominated epoxy resins.

In the cured state the epoxy resin compositions according to the present invention have a high heat resistance, i.e. excellent stability and strength at high temperature, and are not brittle at ambient temperature. They can be used as an adhesive, casting composition, encapsulation composition, moulding composition and in the preparation of laminates.

The present invention is illustrated by:

Production Example 1

In a 3,000 ml three-necked flask equipped with a thermometer, a stirring device and a cooling tube were charged 164 g of 2,6-dihydroxynaphthalene, 1,295 g of epichlorohydrin and 504 g of isopropyl alcohol. The temperature was increased to 35 °C for uniform dissolution, followed by dropwise addition over 1 hour of 190 g of an 48.5 wt% aqueous solution of sodium hydroxide, whilst increasing the temperature to 65 °C. Reaction mixture was maintained at a temperature of 65 °C for 30 minutes. After completion of the reaction, the reaction mixture was washed with water to remove salt by-products and excess sodium hydroxide. Epichlorohydrin and isopropyl alcohol were distilled off under reduced pressure and crude epoxy resin was obtained.

The crude epoxy resin was dissolved in 500 g of methyl isobutyl ketone, followed by addition of 6 g of a 48.5 wt% aqueous sodium hydroxide solution. This mixture was reacted at 65 °C for 1 hour. At the end of

the reaction, monobasic sodium phosphate was added to neutralize excess sodium hydroxide, followed by washing with water to remove salt by-products. Methyl isobutyl ketone was distilled off under reduced pressure and a condensed polynucleararomatic epoxy resin was obtained of the above described general formula I, wherein k = 0.12, having an epoxy equivalent weight of 148 g/eq. and a melting point of 157 °C.

Production Example 2

The process as described in production example 1 was repeated except that 214 g of 2,6-dihydroxyanthracene was used in place of 164 g of 2,6-dihydroxynaphthalene.

A condensed polynucleararomatic epoxy resin of the general formula I was obtained, wherein k = 0.11, having an epoxy equivalent of 173 g/eq. and a melting point of 131 °C.

Production Example 3

The process as described in production example 1 was repeated except that 214 g of 2,7-dihydroxyphenanthrene was used in place of 164 g of 2,6-dihydroxynaphthalene. A condensed polynucleararomatic epoxy resin of the general formula I, wherein k = 0.10, was obtained having an epoxy equivalent of 171 g/eq. and a melting point of 146 °C.

Production Example 4

A 1,000 ml three-necked flask equipped with a thermometer, a stirring device and a cooling pipe, was charged with 330 g of catechol, 300 g of methyl isobutyl ketone, and 5 g of oxalic acid. Subsequently the temperature was raised to 80 °C to dissolve the mixture followed by adding dropwise 175 g of a 36% aqueous solution of formaldehyde over a period of 1 hour while maintaining the temperature at 80 °C. Thereafter, the mixture was reacted at 90 °C for a period of 3 hours. Subsequently water and methyl isobutyl ketone and unreacted catechol were distilled off while gradually raising the temperature to 180 °C and keep it at that temperature for 3 hours under reduced pressure of 3 mmHg. A catechol/formaldehyde condensation compound of the above-described general formula (V), wherein a = 1.2., was thus obtained.

This polyhydric phenolic resin curing agent (b) was a yellowish red solid having a phenolic hydroxyl equivalent weight of 59 g/eq. and a softening point 87 °C.

Production Example 5

The process as described in production Example 4 was repeated except that 290 g of $\alpha,\alpha'$-dihydroxyxylene was used in place of 175 g of a 36% aqueous solution of formaldehyde. A catechol/$\alpha,\alpha'$-dihydroxyxylene condensation compound of the above-described general formula V wherein a = 1.0 was thus obtained.

This polyhydric phenolic resin curing agent (b) was a yellowish red solid having a phenolic hydroxyl equivalent weight of 91 g/eq. and a softening point of 81 °C.

Production Example 6

The process as described in production example 4 was repeated except that 530 g of 2,3-dihydroxynaphthalene was used in place of 330 g of catechol. A 2,3-dihydroxynaphthalene/formaldehyde condensation compound was thus obtained of the above general formula V wherein a = 0.8.

This polyhydric phenolic resin curing agent (b) was a reddish brown solid having a phenolic hydroxyl equivalent weight of 138 g/eq. and a softening point of 102 °C.

Production Example 7

The process of production example 4 was repeated except that 330 g of hydroquinone was used in place of 330 g of catechol. A hydroquinone/formaldehyde condensation compound was thus obtained.

This polyhydric phenolic resin curing agent (L) was a reddish brown solid having a phenolic hydroxyl equivalent weight of 60 g/eq. and a softening point of 85 °C.

Examples 1-4 and Comparative Examples 1-4

As shown in Table 1, epoxy resin compositions were prepared by mixing:

i) as the epoxy resin: a condensed polynucleararomatic epoxy resin obtained in the above production examples 1-3, or a commercially available cresol novolak type epoxy resin;

ii) as the curing agent: a polyhydroxy phenolic resin curing agent obtained in the above production example 4-7, or a commercially available phenol novolak resin; and

iii) triphenyl phosphine as a curing accelerator.

The epoxy resin and the curing agent were melt mixed at a temperature of 100-120 °C for a period of 5 minutes, followed by adding the curing accelerator, quickly mixing, pouring the resulting mixture into a mould and curing the mould 180 °C for a period of 8 hours.

The cured product was cut to obtain test pieces for tensile tests at ambient and elevated temperature. The results of the tensile tests are shown in Table 1. From Table 1 it follows that the cured epoxy resin compositions according to the invention (Examples 1 to 4) have improved tensile strength at high temperature, as compared with the cured comparative epoxy resin compositions (Comparative Example 1-4).

TABLE 1

| | Ex. 1 | Ex. 2 | Ex 3 | Ex. 4 | Comp. Ex. 1 | Comp. Ex. 2 | Comp. Ex. 3 | Comp. Ex. 4 |
|---|---|---|---|---|---|---|---|---|
| Formulation in parts by weight | | | | | | | | |
| Epoxy resin | Prod. Ex. 1 | Prod. Ex. 1 | Prod. Ex. 2 | Prod. Ex. 3 | Cresol novolak type epoxy resin *1 | Cresol novolak type exoxy resin *1 | Prod. Ex. 1 | Prod. Ex. 1 |
| Amount (g) | 100 | 100 | 100 | 100 | 100 | 100 | 100 | 100 |
| Curing agent | Prod. Ex. 4 | Prod. Ex. 5 | Prod. Ex. 6 | Prod. Ex. 4 | Phenol novolak resin *2 | Prod. Ex. 1 | Phenol novolak resin *2 | Prod. Ex. 4 |
| Amount (g) | 40 | 61 | 80 | 35 | 49 | 28 | 70 | 41 |
| Triphenyl phosphine (g) | 1 | 1 | 1 | 1 | 1 | 1 | 1 | 1 |
| Physical Property of cured resin | | | | | | | | |
| Tensile test at 23 °C Tensile strength ($kg/mm^2$) | 10.7 | 11.0 | 11.3 | 10.8 | 9.4 | 6.8 | 10.2 | 9.5 |
| Elongation (%) | 8.2 | 9.5 | 9.9 | 8.5 | 6.8 | 5.1 | 8.0 | 7.8 |

TABLE 1 (Cont'd)

| | Ex. 1 | Ex. 2 | Ex 3 | Ex. 4 | Comp. Ex. 1 | Comp. Ex. 2 | Comp. Ex. 3 | Comp. Ex. 4 |
|---|---|---|---|---|---|---|---|---|
| Tensile test at 230 °C | | | | | | | | |
| Tensile strength ($kg/mm^2$) | 1.7 | 1.4 | 1.3 | 1.6 | 0.2 | 0.4 | 0.1 | 0.2 |
| Elongation (%) | 4.2 | 4.6 | 4.8 | 4.3 | 5.0 | 4.5 | 5.1 | 4.6 |

Notes in Table 1:

*1; Orthocresol novolak type epoxy resin (EPIKOTE 180S65, Trade Name of Yuka Shell Epoxy K.K., epoxy equivalent weight 210 g

*2; Manufactured by Gunei Chemical Co., hydroxy equivalent weight 103 g softening point 85 °C

## Claims

**1.** An epoxy resin composition comprising a blend of:

(a) at least one condensed polynucleararomatic epoxy resin represented by the following general formula (I)

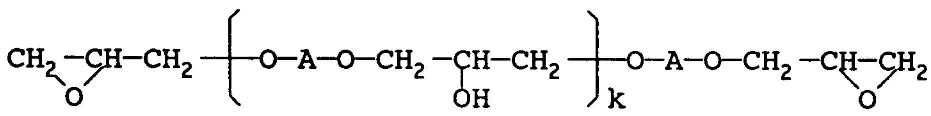 (I)

wherein each A may be the same or different divalent group of the following general formulae (II), (III) or (IV) and wherein k is on average a value in the range of from 0 to 5;

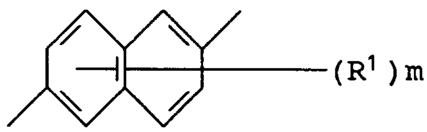 (II)

wherein $R_1$ may be a hydrogen atom, an alkyl group having from 1 to 10 carbon atoms, a substituted or unsubstituted phenyl group, a substituted or unsubstituted aralkyl group, an alkoxy group, or a halogen atom each $R^1$ being be the same or different and m being an integer of from 0 to 6;

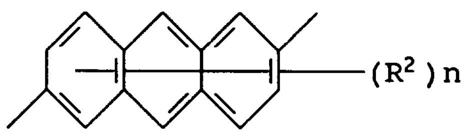 (III)

wherein $R^2$ is a hydrogen atom, an alkyl group having from 1 to 10 carbon atoms, a substituted or unsubstituted phenyl group, a substituted or unsubstituted aralkyl group, an alkoxy group, or a halogen atom, each $R^2$ being be the same or different, and n being an integer of from 0 to 8;

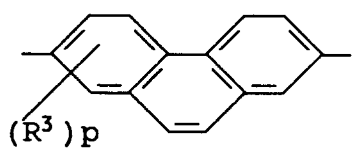 (IV)

wherein $R^3$ represents hydrogen atom, an alkyl group having from 1 to 10 carbon atoms, a substituted or unsubstituted phenyl group, a substituted or unsubstituted aralkyl group, an alkoxy group, or a halogen atom, each $R^3$ being be the same or different, and p being an integer of from 0 to 8; and

(b) at least one polyhydric phenolic resin curing agent derived from at least one polyhydric phenolic compound having at least two phenolic hydroxyl groups which are attached to adjacent positions on an aromatic ring.

**2.** An epoxy resin composition as claimed in claim 1, wherein the condensed polynucleararomatic epoxy resin(s) has/have been obtained by a condensation reaction of one- or a mixture of at least two precursor dihydroxy condensed polynucleararomatic compound(s) with epihalohydrin in the presence of an alkali salt.

**3.** An epoxy resin composition as claimed in claim 2, wherein the precursor dihydroxy condensed polynucleararomatic compound is 2,6-dihydroxynaphthalene, 2,6-dihydroxyanthrancene or 2,7-dihydroxy-phenanthrene.

**4.** An epoxy resin composition as claimed in any one of the claims 1 to 3, wherein the polyhydric phenolic resin curing agent derived from a polyhydric phenolic compound having at least two phenolic hydroxyl groups which are attached adjacent to positions on an aromatic ring is a compound represented by the following general formula (V):

$$B-Y-\left(B-Y\right)_a-B \qquad (V)$$

wherein B represents a monovalent or divalent group based on a polyhydric phenolic compound represented by the following general formulae (VI), (VII), (VIII) or (IX), each B being the same or different, Y represents a divalent group represented by the following general formulae (X), (XI), (XII) or (XIII), Y being the same or different, and a being on average an integer in the range of from 0 to 10;

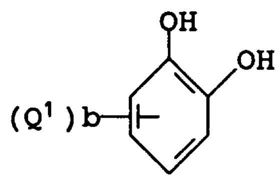

(VI)

wherein $Q^1$ represents an alkyl group having 1 to 10 carbon atoms, a substituted or unsubstituted phenyl group, a substituted or unsubstituted aralkyl group, an alkoxy group, hydroxyl group, or a halogen atom, each $Q^1$ being the same or different and b being an integer of from 0 to 2;

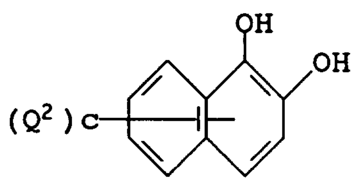

(VII)

wherein $Q^2$ represents an alkyl group having of from 1 to 10 carbon atoms, a substituted or unsubstituted phenyl group, a substituted or unsubstituted aralkyl group, an alkoxy group, hydroxyl group, or a halogen atom, each $Q^2$ being the same or different and c being an integer of from 0 to 4;

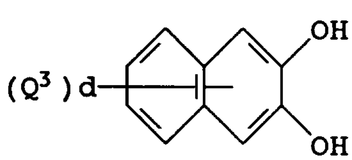

(VIII)

wherein $Q^3$ represents an alkyl group having of from 1 to 10 carbon atoms, a substituted or unsubstituted phenyl group, a substituted or unsubstituted aralkyl group, an alkoxy group, hydroxyl group, or a halogen atom, each $Q^3$ being the same or different and d being an integer of from 0 to 4;

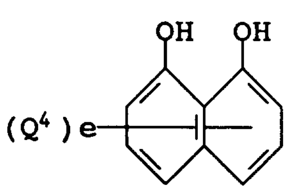

(IX)

wherein $Q^4$ represents an alkyl group having of from 1 to 10 carbon atoms, a substituted or

unsubstituted phenyl group, a substituted or unsubstituted aralkyl group, an alkoxy group, hydroxyl group, or a halogen atom, each $Q^4$ being the same or different and e being an integer of from 0 to 4;

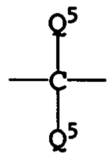

(X)

wherein $Q^5$ represents hydrogen atom, an alkyl group having from 1 to 10 carbon atoms, a substituted or unsubstituted phenyl group, a substituted or unsubstituted aralkyl group, an alkoxy group, hydroxyl group, or a halogen atom, each $Q^5$ being the same or different;

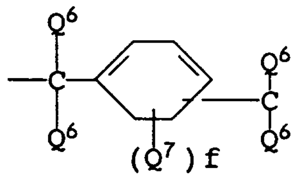

(XI)

wherein $Q^6$ and $Q^7$ each represent a hydrogen atom, an alkyl group having 1 to 10 carbon atoms, a substituted or unsubstituted phenyl group, a substituted or unsubstituted aralkyl group, an alkoxy group, a hydroxyl group or a halogen atom, each $Q^6$ and each $Q^7$ being the same or different, and f being an integer of from 0 to 4;

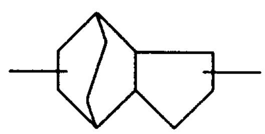

(XII)

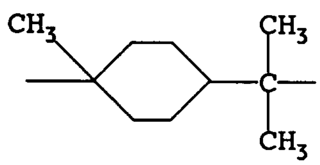

(XIII)

5. An epoxy resin composition as claimed in any one of the claims 1 to 4, wherein the polyhydric phenolic resin curing agent(s) has/have been obtained by subjecting at least one polyhydric phenolic compound having at least two phenolic hydroxyl groups which are attached to adjacent positions on an aromatic ring, to:
   - an addition condensation reaction with a compound having a carbonyl group, or
   - an addition reaction with a compound having an unsaturated bond or
   - a condensation reaction with an α-hydroxyalkylbenzene or an α-alkoxyalkylbenzene.

6. An epoxy resin composition as claimed in claim 5, wherein the amount used of the compound having a carbonyl group or of the compound having an unsaturated bond, or of the α-hydroxybenzene or α-alkoxyalkylbenzene is of from 0.2 to 0.8 mole per mol of the total amount of phenolic compounds used in the preparation of the polyhydric phenolic resin curing agent.

7. An epoxy resin composition as claimed in claim 5 or 6, wherein the polyhydric phenolic resin curing agent is the oligomerisation reaction product of catechol and formaldehyde of catechol and α,α'-dihydroxyxylene of catechol and 2,3-dihydroxynaphthalene or of hydroquinone and formaldehyde.

8. An epoxy resin composition as claimed in any one of the claims 1 to 7, wherein the polyhydric phenolic resin curing agent is derived from a mixture of a polyhydric phenolic compound having at least two

phenolic hydroxyl groups which are attached to adjacent position on an aromatic ring and at least one other phenolic compound, said mixture comprising 50% by weight or less, based on the total weight of the mixture, of said other phenolic compound(s).

**9.** An epoxy resin composition as claimed in any one of the claims 1 to 8 further comprising at least one epoxy resin other than a condensed polynucleararomatic epoxy resin, in an amount of less than 200 parts by weight per 100 parts by weight of the condensed polynucleararomatic epoxy resin(s).

**10.** An epoxy resin composition as claimed in any one of the claims 1 to 9 further comprising another epoxy resin curing agent in admixture with the polyhydric phenolic resin curing agent(s) (b), in an amount of less than 200 parts by weight per 100 parts by weight of the polyhydric phenolic resin curing agent.

**11.** A process for the preparation of an epoxy resin composition as claimed in any one of the claims 1 to 10 by mixing in any suitable manner the condensed polynucleararomatic epoxy resin(s) with the polyhydric phenolic resin curing agent(s) and optionally with any further epoxy resin, curing agent or additive.

**12.** Use of an epoxy resin composition as claimed in any one of the claims 1 to 10 as an adhesive, casting composition, encapsulation composition, moulding composition and in the preparation of laminates.

**13.** Articles comprising the epoxy resin composition as claimed in any one of the claims 1 to 10 in the cured state.

European Patent Office

# EUROPEAN SEARCH REPORT

Application Number
EP 95 20 1158

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 226 648 (DAINIPPON INK AND CHEMICALS, INC.)<br>* claims 1,6 *<br>* page 2, line 11 - page 4, line 4 * | 1-3, 11-13 | C08G59/24<br>C08G59/62<br>C08L63/02<br>C08L61/00<br>//(C08L63/02, 61:00), (C08L61/00, 63:02) |
| A | DATABASE WPI<br>Week 9109,<br>Derwent Publications Ltd., London, GB;<br>AN 91-062704<br>& JP-A-3 012 417 (NIPPON STEEL CHEM. KK) 21 January 1991<br>* abstract * | 1-3, 11-13 | |
| A | PATENT ABSTRACTS OF JAPAN<br>vol. 12, no. 501 (C-556) 27 December 1988<br>& JP-A-63 211 274 (NIPPON STEEL CHEM. KK) 2 September 1988<br>* abstract * | 1-3, 11-13 | |
| A | DATABASE WPI<br>Week 9348,<br>Derwent Publications Ltd., London, GB;<br>AN 93-381046<br>& JP-A-5 283 560 (NITTO DENKO CORP.) 29 October 1993<br>* abstract * | 1,11-13 | **TECHNICAL FIELDS SEARCHED (Int.Cl.6)**<br>C08G<br>C08L |
| A | EP-A-0 342 035 (MINNESOTA MINING AND MANUFACTURING COMP.)<br>* claims 1-6; example 10 *<br>* page 3, line 47 - page 4, line 58 * | 1,4-7, 11-13 | |
| P,A | WO-A-95 08584 (SHELL INTERNATIONALE RESEARCH MAATSCHAPPIJ B.V.)<br>* the whole document * | 1,4-13 | |

The present search report has been drawn up for all claims

| Place of search | Date of completion of the search | Examiner |
|---|---|---|
| BERLIN | 21 August 1995 | Krische, D |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)